# EUROPEAN PATENT APPLICATION

(11) **EP 1 580 633 A1**
(43) Date of publication of application: **28.09.2005**
(21) Application number: 03782832.4
(22) Date of filing: 19.12.2003
(51) Int. Cl.: G05B 19/418

(54) **SHIPMENT MANAGEMENT SYSTEM AND SHIPMENT MANAGEMENT METHOD**

(30) Priority: 27.12.2002 JP 2002381010
(71) Applicant: HONDA MOTOR CO., Ltd., Minato-ku, Tokyo 107-8556 (JP)
(72) Inventor: UEHARA, Shigemi, c/o Honda Motor Co., Ltd., Tokyo 107-8556 (JP); TOMITA, Noriyuki, c/o Honda Motor Co., Ltd., Tokyo 107-8556 (JP); TAKAHASHI, Hidekazu, c/o Honda Motor Co., Ltd., Tokyo 107-8556 (JP); ITOU, Masaji, c/o Honda Motor Co., Ltd., Tokyo 107-8556 (JP); MIKI, Katsutoshi, c/o Honda Motor Co., Ltd., Tokyo 107-8556 (JP)
(74) Representative: Donné, Eddy
(86) International application number: PCT/JP2003/016327
(87) International publication number: WO 2004/061538

(57) **Abstract**

This invention provides a shipping-management system and shipping-management method that make it possible to reduce the cost and lighten the inventory burden when managing repairs parts as inventory, and that make it possible to do away with distribution costs for loading repair parts into the inventory of a brand manufacturer.

The inventory of a repair-parts manufacturer is stored in a management-information-memory unit 201 as inventory information; allocation is performed on the inventory according to a part order from an ordering source; stores the repair parts that are stored as inventory information as order information, and stores the repair parts that are not stored as inventory information as non-allocated information in the management-information-memory unit respectively; at a preset order time, an order-information-extraction unit 205 extracts stored unsent order information and sends it to the repair-parts manufacturer, and at a preset non-allocated-transmission time, a non-allocated-information-extraction unit 206 extracts stored non-allocated information and sends it to the repair-parts manufacturer.

## Description

### DETAILED DESCRIPTION OF THE INVENTION

### Field of the Invention:

This invention relates to a shipping-management system and shipping-management method that manages the shipping of repair parts to the ordering source, and more particularly, relates to a shipping-management system and shipping-management method that manages direct shipping of shipping repair parts directly from the repair-parts manufacturer to the ordering source without going through a brand manufacturer.

### Description of the Related Art

Conventionally, repair parts such as the front or rear bumper for repairing an automobile that is a currently mass produced model in large demand, the order from the ordering source, such as a dealer or distributor, is responded to quickly depending on the inventory in the brand manufacturer's warehouse. Also, in the case of repair parts for old models with relatively small demand, orders are sent periodically to the repair-parts manufacturer in order to maintain the inventory in the brand manufacturer's warehouse.

The repair-parts-management department of the brand manufacturer manages repair parts that are put into the brand manufacturer's warehouse from the repair-parts manufacturer as inventory, and performs shipment from the brand manufacturer's warehouse to the ordering source in response to a order from an ordering source, such as a dealer or distributor.

Also, the inventors of this invention have proposed a receiving and ordering processing system that comprises: a database that stores supply-performance data for each repair part of a plurality of repair-parts manufacturers that supply repair parts to the ordering source; an order-receiving unit by which the brand manufacturer receives orders from the ordering source; a specified-repair-part-judgment unit that references the database and determines whether or not a repair part for which an order was received by the order-receiving unit is a specified repair part that has a very high due-date-observance rate; a ordering unit that specially orders a specified repair part from a specified repair-parts manufacturer that handles the specified repair part that was determined to be a specified part by the specified-repair-part-judgment unit; and a receiving/shipping-processing unit that receives the specified-part that was specially ordered and ships it to the ordering source without putting it into the warehouse (for example, refer to Japanese patent Publication No. 2002-226045).

However, in the prior art, it was necessary to deliver the repair part first to the brand manufacturer's warehouse, and in the case of an expensive and large repair part such as an automobile bumper, for example, there were problems in that the cost and the inventory burden became large, and furthermore, the burden of the distribution cost for delivering the repair part to the brand manufacturer's warehouse was large.

Moreover, in patent Japanese patent Publication No. 2002-226045, shipping management of repair parts is dependent on the repair-parts manufacturer, so there are problems in that it is difficult to accurately know the delivery date for a repair part, and it is not possible to receive the date when the ordered repair part is to be delivered to the ordering source or to supply information to the ordering source.

Taking into consideration these problems, the object of this invention is to provide a shipping-management system and shipping-management method that can reduce the cost and inventory burden when managing the repair part as inventory, can do away with the distribution cost for putting the repair part in the brand manufacturer's warehouse, and furthermore that can receive the date when the ordered repair part is to be delivered to the ordering source as well as supply information.

### DISCLOSURE OF INVENTION

The invention is constructed as described below in order to solve the problems mentioned above.
The shipping-management system of this invention is a shipping-management system that manages direct shipping of shipping directly from the parts manufacturer to the ordering source according to a part order for repair parts from the ordering source to the brand manufacturer and it comprises: a management-information-memory unit that stores inventory information, order information and non-allocated information; an allocation-process unit that performs an allocation process for the inventory according to the part order from the ordering source, and stores repair parts, which are registered in the inventory information, in the management-information-memory unit as order information, and stores repair parts, which are not registered in the inventory information, in the management-information-memory unit as non-allocated information; an order-information-extraction unit that, at a preset order time, extracts unsent order information that is stored in the management-information-memory unit and sends it to the parts manufacturer; a non-allocated-information-extraction unit that, at a preset non-allocated-transmission time, extracts non-allocated information that is stored in the management-information-memory unit and sends it to the parts manufacturer; and an inventory-setting unit that stores the inventory of the parts manufacturer in the management-information-memory unit as inventory information.

Moreover, the invention further comprises a re-allocation-process unit that from among repair parts loaded in the warehouse inventory of the parts manufacturer, stores the repair parts, which are stored in the management-information-memory unit as non-allocated information, in the management-information-memory unit as order information.

The shipping-management method of this invention is a shipping-management method that manages direct shipping of shipping directly from the parts manufacturer to the ordering source according to a part order for repair parts from the ordering source to the brand manufacturer and stores in memory the inventory of the parts manufacturer as inventory information, performs allocation for the inventory according to the part order from the ordering source, stores in memory the repair parts that are stored as inventory information as order information, stores in memory the repair parts, which are not stored as inventory information, as non-allocated information, extracts at a preset order time unsent order information that is stored and sends it to the parts manufacturer, and extracts at a preset non-allocated-transmission time non-allocated information that is stored and sends it to the parts manufacturer.
Also, of the repair parts that are loaded in the warehouse inventory of the parts manufacturer, it is possible to store the repair parts, which are stored as non-allocated information, as order information.

### BRIEF DESCRIPTION OF THE DRAWINGS

Fig. 1 is a schematic drawing of the system construction of an embodiment of the shipping-management system of this invention.
Fig. 2 is a drawing that explains delivery and shipping of repair parts in an embodiment of the shipping-management system of this invention.
Fig. 3 is a block diagram showing the construction of the shipping-management apparatus shown in Fig. 1.
Fig. 4 is a flowchart for explaining the order-receiving operation of an embodiment of the shipping-management system of this invention.
Fig. 5 is a flowchart for explaining the warehouse-loading and re-allocation operation of an embodiment of the shipping-management system of this invention.

### DESCRIPTION OF THE PREFERRED EMBODIMENT

The preferred embodiment of the invention will be explained in detail based on the drawings.

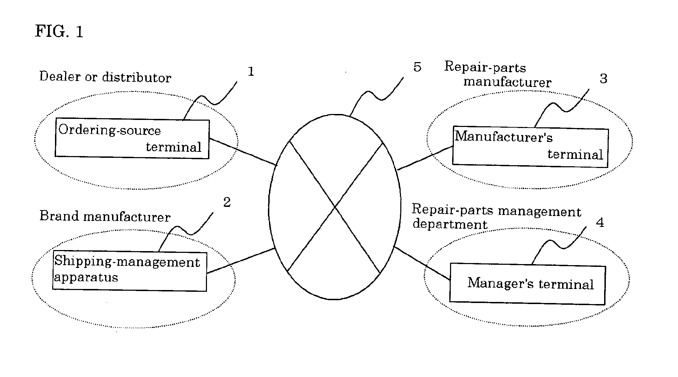

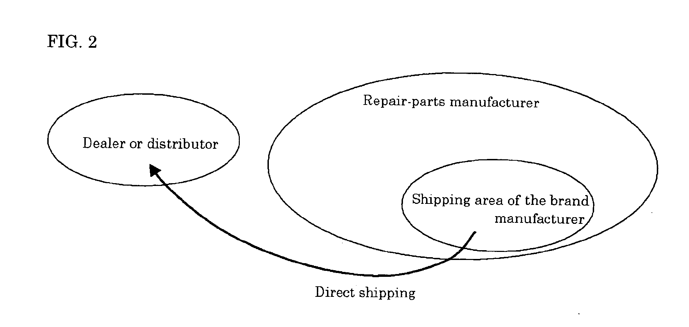

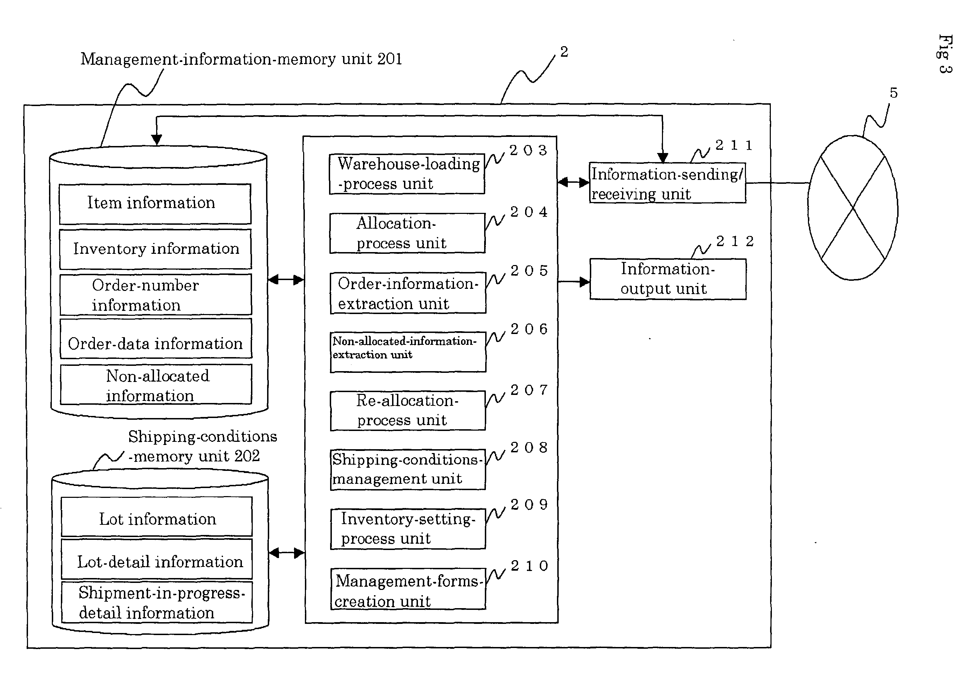

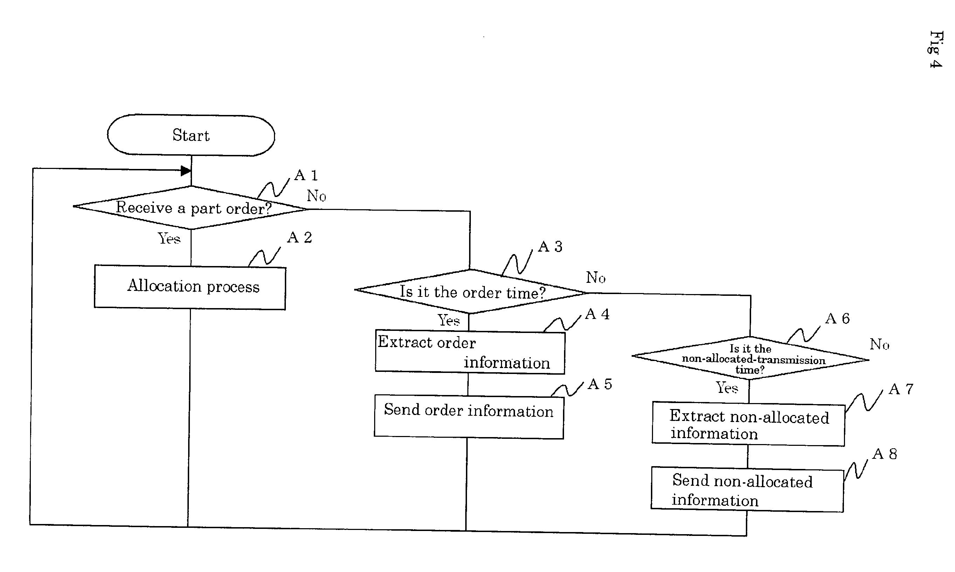

Fig. 1 is a schematic drawing of the system construction of an embodiment of the shipping-management system of this invention, Fig. 2 is a drawing that explains delivery and shipping of repair parts in an embodiment of the shipping-management system of this invention, and Fig. 3 is a block diagram showing the construction of the shipping-management apparatus shown in Fig. 1.

This embodiment of the invention, as shown in Fig. 1, comprises: an ordering-source terminal 1 that is located at the ordering source such as a dealer or distributor that orders a repair part; a shipping-management apparatus 2 that the brand manufacturer manages; a manufacturer's terminal 3 that is located at the repair-parts manufacturer that manufactures the repair part; and a manager's terminal 4 that is located at the repair-parts-management department of the brand manufacturer, and they are all connected by way of a network 5 such as the Internet or LAN, and the shipping-management apparatus 2 manages direct shipping of shipping the ordered repair part directly from the repair-parts manufacturer to the ordering source.

As shown in Fig. 2, in this embodiment of the invention, the brand manufacturer's shipping area is located within the factory site of the repair-parts manufacturer, and direct shipping from the brand manufacturer's shipping area at the factory site of the repair-parts manufacturer to ordering source is performed according to an order from the ordering source. The brand manufacturer's shipping area at the factory site of the repair-parts manufacturer is imaginary, and repair parts are not actually located at the brand manufacturer's shipping area.

The ordering-source terminal 1 is an information-processing apparatus such as a computer, and has a function of sending or receiving information between it and the shipping-manage apparatus 2 over the network 5, and together with specifying the repair part to be ordered and sending a part order, it requests the management-forms-creation unit 210 to create various management forms, and receives the various management forms created by the management-forms-creation unit 210. Also, the ordering-source terminal 1 has a function for directly accessing the management-information-memory unit 201 by way of the information-sending/receiving unit 211, and searching the information stored in the management-information-memory unit 201.

As shown in Fig. 3, the shipping-management apparatus 2 comprises: a management-information-memory unit 201 that stores item information, inventory information, order-number information, order-data information and non-allocated information; a shipping-condition-memory unit 202 that stores lot information, lot-detail information and shipping-in-progress-detail information; a warehouse-loading-process unit 203 that performs the warehouse-loading process for repair parts; an allocation-process unit 204 that performs the allocation process for repair parts; an order-information-extraction unit 205 that extracts unsent order information from the management-information-memory unit 201; a non-allocated-information-extraction unit 206 that extracts non-allocated information from the management-information-memory unit 201; a re-allocation-process unit 207 that performs a re-allocation process; a shipping-conditions-management unit 208 that manages the shipping conditions; an inventory-setting-process unit 209 that stores the actual inventory in the management-information-memory unit 201 as inventory information; and a management-forms-creation unit 210 that creates management forms. The reference number 211 indicates an information-sending/receiving unit that transmits information between the ordering-source terminal 1 and the manufacturer's terminal 3 over the network 5, and the reference number 212 indicates an information-output unit such as a display or printer.

The management-information-memory unit 201 is a memory means that stores item information, inventory information, order-number information, order-data information and non-allocated information; and the repair parts, for which shipping is managed by the shipping-management apparatus 2, are stored as item-management information, the inventory of the repair-parts manufacturer is stored as inventory information, the unique repair-part numbers that are used for the parts order are stored as order-number information, the repair parts that are specified for shipment by the repair-parts manufacturer are stored as order-data information, and repair parts the could not be specified for shipment by the repair-parts manufacturer are stored as non-allocated information. The item information, inventory information, order-data information and non-allocated information are managed according to the repair-part numbers that are given to the repair parts, and the order-data information and non-allocated information are managed with the order number, stored as order-number information, as the key.
The shipping-condition-memory unit 202 is a memory means that stores lot information, lot-detail information and shipment-in-progress-detail information, where an order number is stored as lot information, the type and quantity of a repair part for which an order has been received for each order number is stored as lot-detail information, and the shipping conditions of the shipment for each order number are stored as shipment-in-progress-detail information. The shipment-in-progress-detail information, lot information and lot-detail information are managed with the order number, stored as order-number information, as the key.
When received information related to warehouse loading is warehouse-loading information, the warehouse-loading-process unit 203 determines whether or not a repair part stored as non-allocated information in the management-information-memory unit 201 exists for a repair part specified by warehouse-loading information, and when a repair part stored in the management-information-memory unit 201 as non-allocated information exists for a repair part specified by the warehouse-loading information, it instructs the re-allocation-process unit 207 to perform the re-allocation process on the repair part specified by the warehouse-loading information, and registers repair parts that are not stored in the management-information-memory unit 201 as non-allocated information in the inventory information stored in the management-information-memory unit 201.
Also, when the received information related to warehouse loading is warehouse-loading-cancel information, the warehouse-loading-process unit 203 deletes the repair part specified by the warehouse-loading-cancel information from the inventory information stored in the management-information-memory unit 201.

The allocation-process unit 204 searches the inventory information stored in the management-information-memory unit 201, and checks whether or not the repair part ordered by a part order exists in the inventory of the repair-parts manufacturer, and then of the ordered repair parts, stores the repair parts existing in the inventory of the repair-parts manufacturer in the management-information-memory unit 201 as order information, and of the ordered repair parts, stores the repair parts that do not exist in the inventory of the repair-parts manufacturer in the management-information-memory unit 201 as non-allocated information.

The order-information-extraction unit 205 extracts non-allocated information that is stored in the management-information-memory unit 201 at each preset non-allocated-transmission time, and sends the extracted non-allocated information to the manufacturer's terminal 3 by way of the information-sending/receiving unit 211.

The non-allocated-information-extraction unit 206 extracts unsent non-allocated information from the non-allocated information stored in the management-information-memory unit 201 at each preset non-allocated-transmission time, and sends the extracted non-allocated information to the manufacturer's terminal 3 by way of the information-sending/receiving unit 211.

The re-allocation-process unit 207 performs a re-allocation process on the repair parts specified by the warehouse-loading information and stores the repair parts, which are stored in the management-information-memory unit 201 as non-allocated information, in the management-information-memory unit 201 as order information.

The shipping-conditions-management unit 208 receives information related to the shipping of repair parts from the manufacturer's terminal 3 such as the shipment-in-progress summary, packing and removal information, usual-removal information, unusual-removal information, removal report cancellation report, shipping report, shipping report cancellation report, truck batch-dispatch report, loading report, truck dispatch report, and loading cancellation report, and stores it as the shipment-in-progress-detail information in the shipping-conditions-memory unit 202.

The inventory-setting-process unit 209 stores the received initial-inventory information or stock information of the repair-parts manufacturer in the management-information-memory unit 201 as inventory information. When the information received from the manufacturer's terminal 3 is received stock information, the inventory-setting-process unit 209 stores the results of reflecting the shipment-in-progress-detail information in the shipping-condition-memory unit 202 on the stock information in the management-information-memory unit 201 as inventory information.

The management-forms-creation unit 210 creates various management forms according to requests from the ordering-source terminal 1, the manufacturer's terminal 3 or manager's terminal 4, then sends the created management forms to the ordering-source terminal 1, the manufacturer's terminal 3 or manager's terminal 4, or outputs them from the information-output unit 212. The management forms that are created by the management-forms-creation unit 210 could be a shipping-item list, shipping-exclusion list, inventory list, undelivered shipment/remaining order list, distribution-effect-record list, shipment-receiving-rate report (created automatically daily, weekly, and monthly), shipment-object-repair-part BO (back order) cancellation interval record list, etc.

The manufacturer's terminal 3 is an information-processing apparatus such as a computer and has a function for sending or receiving information between it and the shipping-management apparatus 2 over the network 5, and together with sending information related to warehouse loading, information related to shipping, initial-inventory information and stock information to the shipping-management apparatus 2, it sends a request to the management-forms-creation unit 21 to create various management forms, and receives various management forms that are created by the management-form-creation unit 210. Also, the manufacturer's terminal 3 has a function for directly accessing the management-information-memory unit 201 by way of the information-sending/receiving unit 211, and searches the various information stored in the management-information-memory unit 201.

The manager's terminal 4 is an information-processing apparatus such as a computer, and has a function for sending or receiving information between it and the shipment-management apparatus 2 by way of the network 5, and it sends a request to the management-forms-creation unit 210 to create various management forms, and receives various management forms that are created by the management-forms-creation unit 210. Also, the manager's terminal 4 can directly access the management-information-memory unit 201 by way of the information-sending/receiving unit 211, store various information in the management-information-memory unit 201, and correct or delete the various information stored in the management-information-memory unit 201, for example, it can perform a process for reflecting the shared and combined repair-part number in the item information, inventory information, or non-allocated information that is stored in the management-information-memory unit 201. Furthermore, as in the case of the ordering-source terminal 1, it is also possible to use the manager's terminal 4 to send special part orders from the repair-parts-management department to the shipping-management apparatus 2.

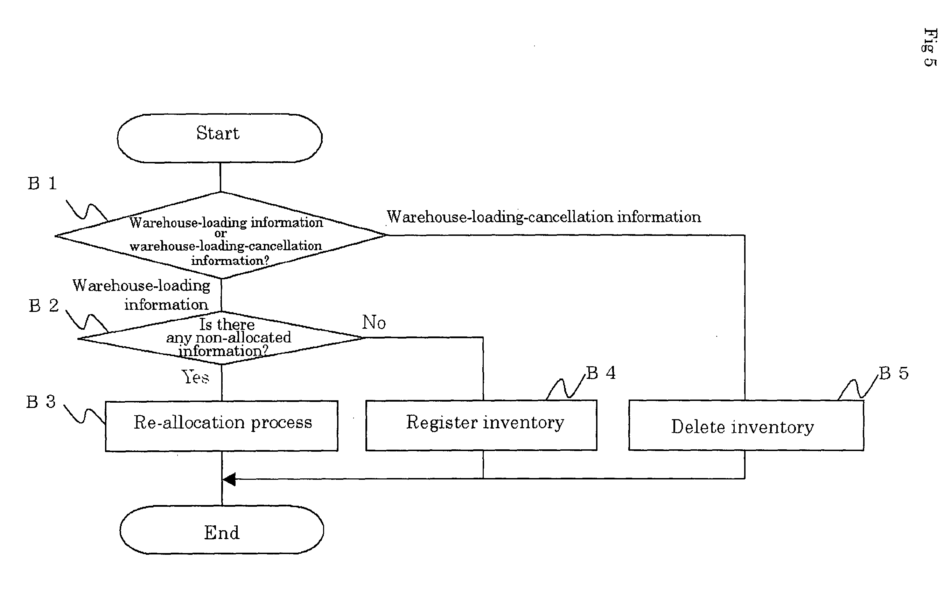

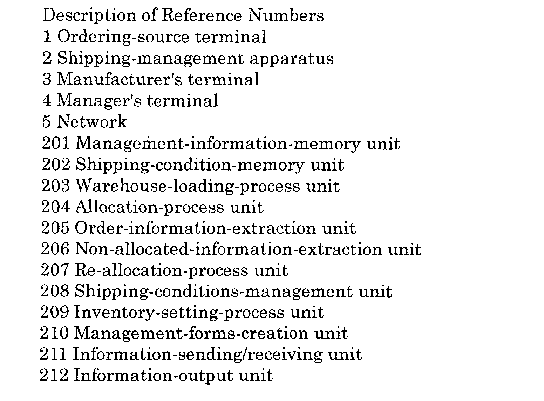

Next, the operation of this embodiment will be explained in detail with reference to Fig. 4 and Fig. 5.
Fig. 4 is a flowchart for explaining the order-receiving operation of an embodiment of the shipping-management system of this invention, and Fig. 5 is a flowchart for explaining the warehouse-loading and re-allocation operation of an embodiment of the shipping-management system of this invention.

First, Fig. 4 will be used as a reference to explain the ordering operation of this embodiment.
At the ordering source, a part order specifying the repair part to be ordered is input at the ordering-source terminal 1, and the input part order is then sent from the ordering-source terminal 1 to the shipping-management apparatus 2. The information-sending/receiving unit 211 monitors the receiving of the part order from the ordering-source terminal 1 (step A1), and after the information-sending/receiving unit 211 has received the part order from the ordering-source terminal 1, the allocation-process unit 204 performs the allocation process based on the part order received by the information-sending/receiving unit 211 (step A2).

The allocation process by the allocation-process unit 204, first applies a unique order number to the received part order, and stores the applied order number in the management-information-memory unit 201. Next, the allocation-process unit 204 searches for inventory information that is stored in the management-information-memory unit 201, and checks whether or not the repair part ordered by the part order exists in the inventory of the repair-parts manufacturer; and when the entire quantity of order repair parts exist as inventory of the repair-parts manufacturer, all of the ordered repair parts are stored in the management-information-memory unit 201 as order information; and when only part of the ordered repair parts exist as inventory of the repair-parts manufacturer, the repair parts of the ordered repair parts that exist as inventory of the repair-parts manufacturer are stored in the management-information-memory unit 201 as order information, and the repair parts of the ordered repair parts that do not exist as inventory of the repair-parts manufacturer are stored in the management-information-memory unit 201 as non-allocated information; and when none of the order repair parts exist as inventory of the repair-parts manufacturer, all of the order repair parts are stored in the management-information-memory unit 201 as non-allocated information. The repair parts that were stored by the allocation process as order information are deleted from the inventory information.

Next, the allocation-process unit 204 sends the order number given to the ordered part order together with the delivery date for the repair parts of the ordered repair parts that exist as inventory of the repair-parts manufacturer to the ordering-source terminal 1. The allocation-process unit 204 calculates the delivery date by determining the order time at which the order information is sent to the manufacturer's terminal 3, and the next order time from the time when the part order was received and that is preset according to the location of the ordering source.

Next, the allocation-process unit 204 registers the order number given to the received part order and the type and quantity of the repair parts in the shipping-condition-memory unit 202 as the lot information and the lot-detail information, respectively.

Also, the order-information-extraction unit 205 monitors whether or not the time is the preset order time (step A3), and when the time is the preset order time, it extracts the unsent order information from among the order information stored in the management-information-memory unit 201 (step A4), and sends the extracted order information to the manufacturer's terminal 3 by way of the information-sending/receiving unit 211 (step A5), then returns to step A1.
The order information from the shipping-management apparatus 2 is output from the manufacturer's terminal 3, and the shipping work is performed by the repair-parts manufacturer based on the output order information. The order time can be set to three times a day depending on the cycle of the shipping work.

Moreover, the non-allocated-information-extraction unit 206 monitors whether or not the time is the preset non-allocated transmission time (step A6), and when the time is the preset non-allocated transmission time, it extracts the non-allocated information that is stored in the management-information-memory unit 201 (step A7), and sends the extracted non-allocated information to the manufacturer's terminal 3 by way of the information-sending/receiving unit 211 (step A8), then returns to step A1. The non-allocated information from the shipping-management apparatus 2 is output from the manufacturer's terminal 3, and it is possible to check from the side of the repair-parts manufacturer the repair parts that are non-allocated. From the implication that the inventory work for the next day is checked, the non-allocated transmission time can be set once in the evening.

Next, the warehouse-loading and re-allocation operation of this embodiment will be explained with reference to Fig. 5.
When loading repair parts in to the warehouse inventory of the repair-parts manufacturer, warehouse-loading information that specifies the repair parts being loaded in the warehouse is input to the manufacturer's terminal 3; and when canceling repair parts that are loaded in the warehouse inventory of the repair-parts manufacturer, the warehouse-loading-cancellation information that specifies the repair parts for which loading is to be canceled is input to the manufacturer's terminal 3, and the input warehouse-loading information or warehouse-loading-cancellation information is sent to the shipping-management apparatus 2 as warehouse-loading-related information.

After the warehouse-loading-related information from the manufacturer's terminal 3 is received by the information-sending/receiving unit 211 of the shipping-management apparatus 2, the warehouse-loading-process unit 203 determines whether the received warehouse-loading-related information is warehouse-loading information or warehouse-loading-cancellation information (step B1), and when the received warehouse-loading-related information is warehouse-loading information, it determines whether or not the repair parts stored in the management-information-memory unit 201 as non-allocated information exist in the repair parts specified by the warehouse-loading information (step B2), and when repair parts stored in the management-information-memory unit 201 as non-allocated information exist in the repair parts specified by the warehouse-loading information, it instructs the re-allocation-process unit 207 to perform the re-allocation process, and the re-allocation-process unit 207 performs the re-allocation process on the repair parts from among the repair parts specified by the warehouse-loading information that are stored as non-allocated information in the management-information-memory unit 201 (step B3). Also, repair parts from among the repair parts specified by the warehouse-loading information that are not stored in the management-information-memory unit 201 as non-allocated information, are registered in the inventory information that is stored in the management-information-memory unit 201 (step B4).

Of the repair parts specified by the warehouse-loading information, the re-allocation process by the re-allocation-process unit 207 stores the repair parts, which were stored in the management-information-memory unit 201 as non-allocated information in the management-information-memory unit 201, as order information. The repair parts that are stored as order information in the re-allocation process are deleted from the non-allocated information.

In step B1, when the received warehouse-loading-related information is warehouse-loading-cancellation information, the repair parts that are specified by the warehouse-loading-cancellation information are deleted from the inventory information stored in the management-information-memory unit 201 (step B5).

Next, the shipping operation of this embodiment will be explained.
Information related to shipping repair parts such as a shipment-in-progress summary, packing and removal information, normal removal report, exception removal report, removal report cancellation report, shipping report, shipping report cancellation report, truck batch-dispatch report, loading report, truck dispatch report, loading cancellation report, or the like are input to the manufacturer's terminal 3, and this input information related to shipping repair parts is sent from the manufacturer's terminal 3 to the shipping-management apparatus 2. After the information related to shipping repair parts is received from the manufacturer's terminal by the information-sending/receiving unit 211 of the management-information-memory unit 201, the shipping-conditions-management unit 208 receives the received information related to shipping repair parts, and stores it as shipment-in-progress-detail information in the shipment-conditions-memory unit 202.

Next, the initial inventory setting and stocking operation of this embodiment will be explained.
The inventory of repair parts of the repair-parts manufacturer is counted and input from the manufacturer's terminal, and the input inventory of repair parts is then sent to the shipping-management apparatus 2 as initial inventory information or stock information. After the initial inventory information or stock information is received from the manufacturer's terminal 3 by the information-sending/receiving unit 211 of the management-information-memory unit 201, the inventory-setting-process unit 209 stores the received initial inventory information or stock information in the management-information-memory unit 201 as inventory information. When the information received from the manufacturer's terminal 3 is stock information, the inventory-setting-process unit 209 stores the results of reflecting the shipment-in-progress-detail information on the stock information in the management-information-memory unit 201 as inventory information.

This invention is not limited to the embodiment described above, and it is evident that the embodiment can be suitably changed within the technical range of the invention. Also, the number, position and shape of the components are not limited to that of the embodiment described above, and the invention can be embodied with a suitable number, position and shape of components. In the drawings, the same reference numbers are given to identical elements.

### INDUSTRIAL APPLICABILITY

The shipping-management system and shipping-management method of this invention does away with the need to deliver repair parts to the brand manufacturer's warehouse, so it possible to reduce the cost and inventory burden when managing repair parts as inventory, and to do away with the distribution cost for putting the repair part in the brand manufacturer's warehouse, and furthermore since information is provided together with receiving the date when the ordered repair parts will be delivered to the ordering source, it is possible to have communication between the ordering party and the brand manufacturer.

## Claims

1. A shipping-management system that is a shipping-management system that manages direct shipping of shipping directly from the parts manufacturer to the ordering source according to a part order for repair parts from said ordering source to the brand manufacturer and comprising:
a management-information-memory unit that stores inventory information, order information and non-allocated information;
an allocation-process unit that performs an allocation process for the inventory according to said part order from said ordering source, and stores said repair parts, which are registered in said inventory information, in said management-information-memory unit as said order information, and stores said repair parts, which are not registered in said inventory information, in said management-information-memory unit as said non-allocated information;
an order-information-extraction unit that, at a preset order time, extracts unsent said order information that is stored in said management-information-memory unit and sends it to said parts manufacturer;
a non-allocated-information-extraction unit that, at a preset non-allocated-transmission time, extracts said non-allocated information that is stored in said management-information-memory unit and sends it to said parts manufacturer; and
an inventory-setting unit that stores the inventory of the parts manufacturer in the management-information-memory unit as inventory information.

2. The shipping-management system of claim 1 further comprising a re-allocation-process unit that, from among said repair parts loaded in the warehouse inventory of said parts manufacturer, stores said repair parts, which are stored in said management-information-memory unit as said non-allocated information, in said management-information-memory unit as order information.

3. A shipping-management method of this invention that is a shipping-management method that manages direct shipping of shipping directly from the parts manufacturer to the ordering source according to a part order for repair parts from said ordering source to the brand manufacturer and
stores in memory the inventory of the parts manufacturer as inventory information;
performs allocation for the inventory according to said part order from said ordering source, and stores in memory said repair parts, which are stored as said inventory information, as said order information, and stores in memory said repair parts that are not stored as said inventory information as said non-allocated information;
extracts at a preset
order time unsent said order information that is stored and sends it to said parts manufacturer; and
extracts at a preset
non-allocated-transmission time said non-allocated information that is stored and sends it to said parts manufacturer.

4. The shipping-management method of claim 3 wherein of said repair parts that are loaded in the warehouse inventory of said parts manufacturer, said repair parts that are stored as said non-allocated information are stored as order information.
